(19) **Europäisches Patentamt / European Patent Office / Office européen des brevets**

(11) **EP 4 723 565 A1**

(12) **EUROPEAN PATENT APPLICATION**
published in accordance with Art. 153(4) EPC

(43) Date of publication:
08.04.2026 Bulletin 2026/15

(21) Application number: 23937999.3

(22) Date of filing: 25.05.2023

(51) International Patent Classification (IPC):
$H04L\ 25/02^{(2006.01)}$     $H04W\ 72/0446^{(2023.01)}$

(52) Cooperative Patent Classification (CPC):
H04L 5/0051; H04L 25/02; H04L 27/26;
H04L 27/261; H04L 27/2613; H04L 27/2646;
H04L 27/2657

(86) International application number:
PCT/CN2023/096313

(87) International publication number:
WO 2024/239326 (28.11.2024 Gazette 2024/48)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• LYU, Ling
  Shanghai 201601 (CN)
• ZHAO, Zheng
  Shanghai 201601 (CN)
• YANG, Zhongzhi
  Shanghai 201601 (CN)

(74) Representative: **Fish & Richardson P.C.
Highlight Business Towers
Mies-van-der-Rohe-Straße 8
80807 München (DE)**

(54) **WIRELESS COMMUNICATION METHOD, AND TERMINAL DEVICE AND NETWORK DEVICE**

(57) The present disclosure provides a method for wireless communication, a network device, and a terminal device. The method includes: receiving, by a terminal device, first information sent by a network device. The first information is used to indicate a length of a first time period, and the length of the first time period is associated with joint channel estimation. The first information is determined by the network device. In the embodiments of the present disclosure, the configuration information (i.e., the first information) of the joint channel estimation is determined by the network device, that is, the configuration information of the joint channel estimation is determined centered on the network device, which is conducive to reducing the overhead of the uplink channel.

```
Terminal device                              Network device
      |                                             |
      |  <----------- S210, first information ------|
      |                                             |
```

FIG. 2

**Description**

**TECHNICAL FIELD**

The present disclosure relates to the field of communication technology, and more specifically to a method for wireless communication, a terminal device, and a network device.

**BACKGROUND**

Joint channel estimation utilizes demodulation reference signals (DMRS) of a plurality of consecutive time slots for channel estimation, thereby enhancing coverage. In a configuration process of the joint channel estimation, a terminal device-centric configuration method incurs a significant overhead for an uplink channel.

**SUMMARY**

The present disclosure provides a method for wireless communication, a terminal device, and a network device. The following describes various aspects involved in the present disclosure.

According to a first aspect, a method for wireless communication is provided, including: receiving, by a terminal device, first information sent by a network device, where the first information is used to indicate a length of a first time period, and the length of the first time period is associated with joint channel estimation; and where the first information is determined by the network device.

According to a second aspect, a method for wireless communication is provided, including: sending, by a network device, first information to a terminal device, where the first information is used to indicate a length of a first time period, and the length of the first time period is associated with joint channel estimation; and where the first information is determined by the network device.

According to a third aspect, a terminal device is provided, including: a receiving unit, configured to receive first information sent by a network device, where the first information is used to indicate a length of a first time period, and the length of the first time period is associated with joint channel estimation; and where the first information is determined by the network device.

According to a fourth aspect, a network device is provided, including: a sending unit, configured to send first information to a terminal device, where the first information is used to indicate a length of a first time period, and the length of the first time period is associated with joint channel estimation; and where the first information is determined by the network device.

According to a fifth aspect, a terminal device is provided, including: a processor, a memory, and a communication interface, where the memory is configured to store one or more computer programs, and the processor is configured to invoke the computer programs in the memory to cause the terminal device to perform some or all of the operations in the method according to the first aspect.

According to a sixth aspect, a network device is provided, including: a processor, a memory, and a communication interface, where the memory is configured to store one or more computer programs, and the processor is configured to invoke the computer programs in the memory to cause the network device to perform some or all of the operations in the method according to the second aspect.

According to a seventh aspect, an embodiment of the present disclosure provides a communication system, where the communication system includes the above terminal device and/or network device. In another possible design, the communication system may further include other devices that interact with the terminal device or network device as provided in the embodiments of the present disclosure.

According to an eighth aspect, an embodiment of the present disclosure provides a computer-readable storage medium, where the computer-readable storage medium stores a computer program, and the computer program causes the terminal device or network device to perform some or all of the operations in the methods in the foregoing aspects.

According to a ninth aspect, an embodiment of the present disclosure provides a computer program product, where the computer program product includes a non-transitory computer-readable storage medium storing a computer program, and the computer program is executable to cause the terminal device or network device to perform some or all of the operations in the methods in the foregoing aspects. In some implementations, the computer program product may be a software installation package.

According to a tenth aspect, an embodiment of the present disclosure provides a chip, where the chip includes a memory and a processor, and the processor invokes and runs a computer program from the memory, to implement some or all of the operations described in the methods in the foregoing aspects.

In the embodiments of the present disclosure, the configuration information (i.e., the first information) of the joint channel estimation is determined by the network device, that is, the configuration information of the joint channel estimation is determined centered on the network device, which is conducive to reducing the overhead of the uplink channel.

**BRIEF DESCRIPTION OF THE DRAWINGS**

FIG. 1A to FIG. 1C are system architecture diagrams of a communication system to which an embodiment of the present disclosure can be applied.

FIG. 2 is a schematic flowchart of a method for wireless communication according to an embodiment of the present disclosure.

FIG. 3 is a schematic diagram of a relationship between a bidirectional transmission delay and an elevation angle.

FIG. 4 is a schematic diagram of a relationship between a variation of Doppler shift in 20 ms and the elevation angle.

FIG. 5 is another schematic flowchart of a method for wireless communication according to an embodiment of the present disclosure.

FIG. 6 is a schematic structural diagram of a terminal device according to an embodiment of the present disclosure.

FIG. 7 is a schematic structural diagram of a network device according to an embodiment of the present disclosure.

FIG. 8 is a schematic structural diagram of an apparatus for communication according to an embodiment of the present disclosure.

**DETAILED DESCRIPTION OF THE EMBODIMENTS**

The technical solutions in the present disclosure are described below with reference to the accompanying drawings in the embodiments of the present disclosure. It is apparent that the described embodiments are just a part but not all of the embodiments of the present disclosure.

COMMUNICATION SYSTEM ARCHITECTURE

The embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (NTN-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5$^{th}$-generation (5G) system, or other communication systems, e.g., a future communication system, which may be, for example a 6$^{th}$-generation (6G) mobile communication system, or a satellite communication system, etc.

Generally, conventional communication systems support a limited number of connections and are easy to implement. However, with the development of communication technologies, the communication system may not only support conventional communication, but also support, for example, device to device (D2D) communication, machine to machine (M2M) communication, machine type communication (MTC), vehicle to vehicle (V2V) communication, vehicle to everything (V2X) communication, etc. The embodiments of the present disclosure may also be applied to these communication systems.

The communication system in the embodiments of the present disclosure may be applied to a carrier aggregation (CA) scenario, a dual connectivity (DC) scenario, or a standalone (SA) fabric scenario.

The communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a dedicated spectrum.

The embodiments of the present disclosure may be applied to the NTN system or may be applied to a terrestrial network (TN) system. As an example rather than a limitation, the NTN system includes an NR-based NTN system and an IoT-based NTN system.

The embodiments of the present disclosure describes each embodiment in combination with a network device and a terminal device, and the terminal device may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, a user apparatus, or the like.

In embodiments of the present disclosure, the terminal device may be a STATION (ST) in the WLAN, and may be a cellular phone, a cordless phone, a session initiation protocol (SIP) phone, a wireless local loop (WLL) station, a personal digital assistant (PDA) device, a handheld device having a wireless communication function, a computing device or another possessing device connected to a wireless modem, a vehicle-mounted device, a wearable device, a terminal device in a next-generation communication system such as the NR network, or a terminal device in a future evolved public land mobile network (PLMN) network.

In embodiments of the present disclosure, the terminal device may be a device that provides voice and/or data connectivity to a user, which may be used to connect people, objects, or machines, e.g., a handheld device, a vehicle-mounted device, etc., having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the terminal device may serve as a base station. For example, the terminal device may serve as a scheduling entity that provides sidelink signals between terminal devices in V2X, D2D, etc. For example, the cellular phone and the car use sidelink signals to communicate with each other. The cellular phone and the smart home device communicate with each other without relaying communication signals through the base station.

In embodiments of the present disclosure, the terminal device may be deployed on land, including indoors or outdoors, handheld, wearable, or vehicle-mounted, or may be deployed on a water surface (such as ships, etc.), or may be deployed in the air (such as aircrafts, balloons, and satellites, etc.).

In the embodiments of the present disclosure, the terminal device may be a mobile phone, a pad, a computer with wireless transceiver function, a virtual reality (VR) device, an augmented reality (AR) device, a wireless terminal device in industrial control, a wireless terminal device in self-driving, a wireless terminal device in a remote medical, a wireless terminal device in a smart grid, a wireless terminal device in transportation safety, a wireless terminal device in a smart city, a wireless terminal device in smart home, etc. The terminal device involved in the embodiments of the present disclosure may also be referred to as a terminal, user equipment (UE), an access terminal device, a vehicle-mounted terminal, an industrial control terminal, a UE unis, a UE station, a mobile station, a remote station, a remote terminal device, a mobile device, a UE terminal device, a wireless communication device, a UE agent or a UE device, etc. The terminal device may also be fixed or mobile.

As an example rather than a limitation, in the embodiments of the present disclosure, the terminal device may also be a wearable device. The wearable device, also referred to as a wearable smart device, is a general term for wearable devices that are developed by applying wearable technology to intelligently design daily wear, such as glasses, gloves, watches, clothing, and shoes. The wearable device is a portable device that is either worn directly on the body or integrated into the user's clothing or accessories. The wearable device is not merely hardware, it also achieves powerful functionalities through software support, data interaction, and cloud interaction. Broadly speaking, the wearable smart device includes those with comprehensive functions, larger sizes, abilities to operate independently of a smartphone to achieve complete or partial functionality, such as smartwatches or smart glasses, as well as those that focus on specific application functions and require cooperation with other devices like smartphones, such as various types of smart bracelets and smart jewelry for monitoring physiological signs.

The network device in the embodiments of the present disclosure may be a device configured to communicate with the terminal device, and the network device may also be referred to as an access network device or a radio access network device. For example, the network device may be a base station. The network device in the embodiments of the present disclosure may refer to a radio access network (RAN) node (or device) that accesses the terminal device to a wireless network. The base station may broadly cover various names as follows, or may be replaced with the following names, such as a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may further refer to a communication module, a modem, or a chip disposed in the foregoing device or apparatus. The base station may also be a mobile switching center and a device that undertakes a function of the base station in D2D, V2X, M2M communication, a network side device in the 6G network, a device that undertakes a function of the base station in a future communication system, etc. The base station may support networks of the same or different access technologies. A specific technology adopted by the network device and a specific form of the device are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may be a CU or a DU, or the network device includes a CU and a DU. The gNB may also include AAU.

The network device and the terminal device may be deployed on land, including indoors or outdoors, handheld, wearable, or vehicle-mounted, or may be deployed on a water surface (such as ships, etc.), or may be deployed in the air (such as aircrafts, balloons, and satellites, etc.). The scenarios in which the network device and the terminal device are located are not limited in the embodiments of the present disclosure.

As an example rather than a limitation, the network device in the embodiments of the present disclosure may have a mobility characteristic, for example, the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments of the present disclosure, the network device may be a base station disposed at a location such as land, water, etc.

In the embodiments of the present disclosure, the network device may provide services for a cell, and the terminal device communicates with the network device via a transmission resource (e.g., a frequency domain resource, or a spectrum resource) used by the cell. The cell may be a cell corresponding to the network device (e.g., a base station), and the cell may belong to a macro base station or a base station corresponding to a small cell. The small cell may include a metro cell, a micro cell, a pico cell, a femto cell, etc., and these small cells have the characteristics of a small coverage and a low transmission power, which are suitable for providing a high-rate data transmission service.

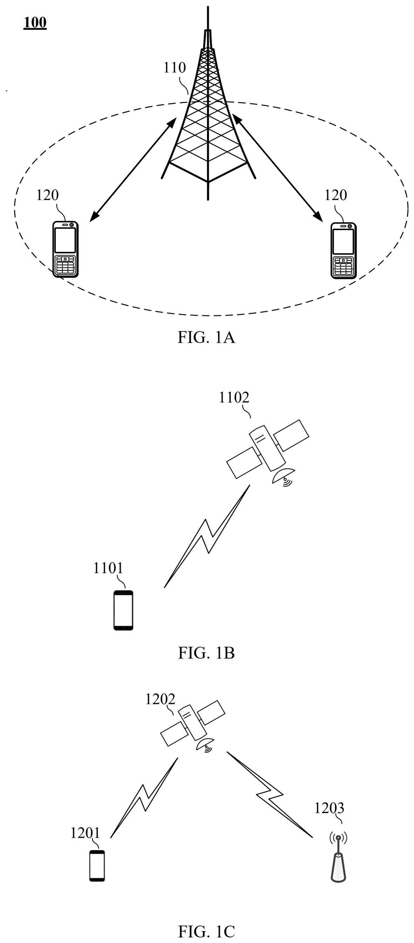

For example, FIG. 1A is a schematic architectural diagram of a communication system according to an embodiment of the present disclosure. As shown in FIG. 1A, the communication system 100 may include a network device 110, and the network device 110 may be a device that communicates with a terminal device 120 (or referred to as a communication terminal or a terminal). The network device 110 may provide communication coverage for a particular geographic area and may communicate with a terminal device located within the coverage area.

FIG. 1A exemplarily shows a network device and two terminal devices. In some embodiments of the present disclosure, the communication system 100 may include a plurality of network devices, and the coverage of each network device may include other numbers of terminal devices, which is not limited in the embodiments of the present disclosure.

For example, FIG. 1B is another schematic architectural diagram of a communication system according to an embodiment of the present disclosure. Referring to FIG. 1B, the communication system includes a terminal device 1101 and a satellite 1102 are included, where wireless communication is performed between the terminal device 1101 and the satellite 1102. A network formed between the terminal device 1101 and the satellite 1102 may also be referred to as NTN. In the architecture of the communication system shown in FIG. 1B, the satellite 1102 may have a function of a base station, and the terminal device 1101 may directly communicate with the satellite 1102. In the system architecture, the satellite 1102 may be referred to as a network device. In some embodiments, the communication system may include a plurality of network devices 1102, and a coverage area of each network device 1102 may include another number of terminal devices, which is not limited in the embodiments of the present disclosure.

For example, FIG. 1C is another schematic architectural diagram of a communication system according to an embodiment of the present disclosure. Referring to FIG. 1C, the communication system includes a terminal device 1201, a satellite 1202, and a base station 1203 are included, where wireless communication is performed between the terminal device 1201 and the satellite 1202, and the satellite 1202 may communicate with the base station 1203. A network formed among the terminal device 1201, the satellite 1202, and the base station 1203 may also be referred to as NTN. In the architecture of the communication system shown in FIG. 1C, the satellite 1202 may not have the function of the base station, and the communication between the terminal device 1201 and the base station 1203 needs to be forwarded through the satellite 1202. In this system architecture, the base station 1203 may be referred to as the network device. In some embodiments of the present disclosure, the communication system may include a plurality of network devices 1203, and the coverage are of each network device 1203 may include another number of terminal devices, which is not limited in the embodiments of the present disclosure.

It should be noted that FIG. 1A to FIG. 1C are merely examples for illustrating the system to which the present disclosure is applicable, and certainly, the method shown in the embodiments of the present disclosure may also be applied to other systems, for example, a 5G communication system, an LTE communication system, or the like, which is not specifically limited in the embodiments of the present disclosure.

In the embodiments of the present disclosure, the wireless communication system shown in FIG. 1A to FIG. 1C may further include other network entities such as a mobility management entity (MME), an access and mobility management function (AMF), etc., which is not limited in the embodiments of the present disclosure.

It should be understood that a device with a communication function in the network/system in the embodiments of the present disclosure may be referred to as the communication device. Taking the communication system 100 shown in FIG. 1A as an example, the communication device may include the network device 110 and the terminal device 120 that have communication functions. The network device 110 and terminal device 120 may be specific devices as described above, which are not elaborated further here. The communication device may further include other devices in the communication system 100, such as a network controller, a mobility management entity, and other network entities, which is not limited in the embodiments of the present disclosure.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the description of the embodiments of the present disclosure, the term "corresponding" may indicate a direct or indirect correspondence between the two, or may indicate that there is an association relationship between the two, or may refer to relationships such as indicating and being indicated, configuring and being configured, etc.

The term "configuration" in the embodiments of the present disclosure may include configuring through at least one of a system message, radio resource control (RRC) signaling, and a media access control control element (MAC CE).

In some embodiments of the present disclosure, "predefined" or "preset" may be implemented by pre-storing a corresponding code, a table, or another manner that can be used to indicate related information in devices (e.g., including the terminal device and the network device), and a specific implementation is not limited in the present disclosure. For example, the predefined may indicate being defined in a protocol.

In some embodiments of the present disclosure, the term "protocol or standard" may refer to standard protocols in the field of communication, which may include LTE protocols, NR protocols, and related protocols applicable to future communication systems, which is not limited in the present disclosure.

To facilitate understanding, some relevant technical knowledge involved in the embodiments of the present disclosure is introduced first. The following related technologies may be combined in any manner with the technical solutions of the present disclosure and are all within the protection scope of the embodiments of the present disclosure. The embodiments of the present disclosure include at least a portion of the following content.

NTN

With the development of communication technology, communication systems (e.g., 5G) will integrate the market potential of satellite and terrestrial network infrastructure. For example, the 5G standard recognizes NTN, which includes satellite segments, as part of the 3rd generation partnership project (3GPP) 5G connectivity infrastructure.

Communication satellites are categorized based on their orbital altitudes into low Earth orbit (LEO) satellites (may also be referred to as low orbit satellites), medium Earth orbit (MEO) satellites, geostationary (GEO, or stationary) satellites, and highly elliptical orbit (HEO) satellites. Among these, LEO is defined as an orbit centered around the Earth with an altitude of 2000 kilometers or less, or with at least 11.25 cycles per day, and an eccentricity of less than 0.25. Most artificial objects in outer space are located in LEO. LEO satellites operate at high speeds (mobility) around the Earth but follow predictable or determined orbits.

Satellites at different orbital altitudes have different orbital periods:

LEO: typical altitude of 250 to 1500 kilometers, orbital period of 90 to 120 minutes.

MEO: typical altitude of 5000 to 25000 kilometers, orbital period of 3 to 15 hours.

GEO: altitude of approximately 35786 kilometers, orbital period of 24 hours.

NTN refers to networks or network segments that utilize radio frequency (RF) resources from satellite or unmanned aerial system (UAS) platforms. Typical scenarios for NTN accessing the terminal device involve NTN transparent payloads or NTN regenerative payloads.

In NTN systems, NTN nodes (such as satellites) are located hundreds of kilometers above the Earth's surface, resulting in longer round trip times (RTT) between terminal devices and satellites. Therefore, the RTT from terminal devices to NTN nodes is significantly higher than that from terminal devices to network devices in terrestrial networks. In the relevant specifications, the propagation delay from a terminal device (UE) to a satellite may be referenced in Table 1.

Table 1: Propagation Delay between UE and Satellite

| | UE and Satellite Delay/ms | | One-way Maximum Propagation Delay/ms |
|---|---|---|---|
| | Minimum | Maximum | |
| LEO | 3 | 15 | 30 |
| MEO | 27 | 43 | 90 |
| GEO | 120 | 140 | 280 |

When NTN networks use RF resources from satellites for communication, relative speeds of communication satellites at different orbital altitudes differ with respect to the Earth. For example, LEO satellites in low orbits move faster, while GEO satellites in high orbits are relatively stationary with respect to the Earth.

JOINT CHANNEL ESTIMATION

In Rel-17, to achieve coverage enhancement, joint channel estimation across multiple consecutive time slots has been introduced. Joint channel estimation may jointly utilize demodulation reference signals from multiple consecutive time slots for channel estimation. For example, in repeated transmission of a physical uplink shared channel (PUSCH), the network device may jointly perform channel estimation using DMRS symbols from multiple time slots. This joint channel estimation helps improve the accuracy of channel estimation, thereby effectively enhancing the coverage performance of the corresponding channel.

The network device may instruct the terminal device to perform DMRS bundling during uplink transmission, where time information associated with the DMRS bundling may be referred to as configuration information for joint channel estimation. To specify a duration of channel bundling, a time domain window (TDW) has been introduced in joint channel estimation. Typically, a duration of the TDW may be represented by the number of consecutive time slots, meaning a length of the time domain window may indicate the number of time slots for DMRS bundling.

To achieve joint channel estimation, DMRS symbols need to maintain power consistency and phase continuity within the time domain window. For example, during DMRS bundling (i.e., within the time domain window), the protocol sets requirements for ranges for certain parameters to meet power consistency and phase continuity.

These parameters may include one or more of a timing error, a Doppler shift error, and a phase difference. The relevant requirements for errors of these parameters are provided in the 3GPP protocol.

Table 1 presents the relevant requirements for the timing error. Refer to Table 1, in frequency range 1, an upper bound of the timing error is related to a subcarrier spacing, such as a subcarrier spacing of a synchronous signal block and a subcarrier spacing of an uplink signal.

Table 1

| Frequency Range | Subcarrier Spacing of Synchronization Signal Block (kHz) | Subcarrier Spacing of Uplink Signal (kHz) | Upper Bound of Timing Error |
|---|---|---|---|
| 1 | 15 | 15 | $29 \times 64 \times T_c$ |
| | | 30 | $24 \times 69 \times T_c$ |
| | | 60 | N/A |
| | 30 | 15 | $24 \times 64 \times T_c$ |
| | | 30 | $22 \times 64 \times T_c$ |
| | | 60 | N/A |

It should be noted that $T_c$ in Table 1 is a basic time unit defined in the protocol.

Table 2 represents a maximum phase difference allowed in DMRS bundling.

Table 2

| Uplink Channel | Modulation Scheme | Phase Difference between Slot p and Slot p-1 (Note 2) | Phase Difference between Slot 0 and Slot p (Note 3) |
|---|---|---|---|
| Physical Uplink Shared Channel | Pi/2 BPSK, QPSK | 25 degrees | 30 degrees |
| Physical Uplink Control Channel | Pi/2 BPSK, BPSK, QPSK | | |

Refer to Table 2, the maximum phase difference allowed in DMRS bundling is associated with a type of uplink channel, modulation scheme, and different scenarios. Note 2 in Table 2 indicates that this requirement applies for frequency division duplexing (FDD) and time division duplexing (TDD) bands, for supported DMRS bundling configurations of less than or equal to 8 slots. Note 3 indicates that this requirement applies only for FDD bands, for supported DMRS bundling configurations of 16 slots.

Additionally, the requirement for the Doppler shift error is not to exceed 0.1 ppm.

In joint channel estimation, during the DMRS bundling process, certain events that may occur are allowed to terminate a current time domain window. The event refers to an event that may lead to disruption of power consistency or phase continuity. For example, the event may refer to a phase difference exceeding the previously mentioned maximum phase difference requirement.

In existing specifications, updates to timing advance are considered as events that lead to the disruption of power consistency and phase continuity. Once such an event occurs, the current time domain window for DMRS bundling should be terminated. Therefore, the above events may also specify updates to timing advance.

After an event occurs, it may be determined whether to restart a new time domain window based on information such as the capability of the terminal device, and DMRS bundling may be performed within the new time domain window.

It is seen that in joint channel estimation, a length of the time domain window for actual DMRS bundling (also referred to as an actual time domain window) may be determined by a length of an initially configured time domain window (also referred to as a nominal time domain window) and the event.

SEGMENTED PRE-COMPENSATION

Segmented pre-compensation is a technology applied to Internet of things (IoT)-NTN. By employing segmented pre-compensation technology, the terminal device may compensate for offsets caused by delay drift and/or frequency shift, such as phase offsets, thereby addressing impacts of delay drift and Doppler shift on long-duration transmissions.

As an implementation, the network device may configure a segment length of pre-compensation for the terminal device, allowing the terminal device to perform pre-compensation updates between segments while maintaining a constant pre-compensation value within the segments.

For the terminal device with the pre-compensation capability, segmented pre-compensation may be applied to joint channel estimation to enhance the performance of the joint channel estimation. The segmented pre-compensation is conducive for the terminal device to extending the length of the actual time domain window for DMRS bundling.

To enhance the coverage capability of non-terrestrial communication networks, joint channel estimation methods may be employed in NTN networks.

However, compared to terrestrial networks, NTN networks, such as satellite communication systems, experience greater propagation delays and more severe Doppler shifts, which affect the use of joint channel estimation in NTN networks. Taking the low Earth orbit satellite communication network in satellite communication systems as an example, due to the transmission delay and Doppler shift caused by the relative motion between the satellite and the terminal device, DMRS symbols received by the base station will experience a certain phase shift, leading to situations that do not meet the phase continuity requirements for DMRS bundling. Additionally, due to rapid changes in the channel state caused by the relative motion between the satellite and the terminal device, the terminal device needs to frequently update the timing advance.

If the terminal device has a time-frequency compensation capability, it may perform the above pre-compensation update periodically to address situations that do not meet phase continuity requirements. Compared to the terminal device without the time-frequency compensation capability, this type of terminal device may perform DMRS bundling over a relatively longer time domain window.

It is seen that the configuration information for joint channel estimation, such as the length of the second time domain window mentioned above, may be associated with various information, including the length of the first time domain window, the transmission delay and Doppler shift caused by the relative motion between the satellite and terminal device, the update to the timing advance, and the update to pre-compensation for the terminal device.

Furthermore, to achieve joint channel estimation, the network device and the terminal device need to have a shared understanding of the configuration information for joint channel estimation. As an implementation, the configuration information for joint channel estimation may be determined centered on the terminal device. Taking the configuration information for joint channel estimation being the length of the second time domain window as an example, the length of the second time domain window may be determined by the terminal device and reported to the network device, or the terminal device may report information associated with the length of the second time domain window to the network device, and both the network device and terminal device have a shared understanding of the method for obtaining the length of the second time domain window based on that information, such as the method for calculating the length of the second time domain window based on that information.

However, determining the configuration information for joint channel estimation centered on the terminal device incurs a significant overhead on the uplink channel.

To address the above issue, embodiments of the present disclosure provide a method for wireless communication, a terminal device, and a network device, in which the network device determines the configuration information (i.e., first information) for joint channel estimation, i.e., the configuration information for joint channel estimation is determined centered on the network device, which is conducive to reducing the overhead on the uplink channel.

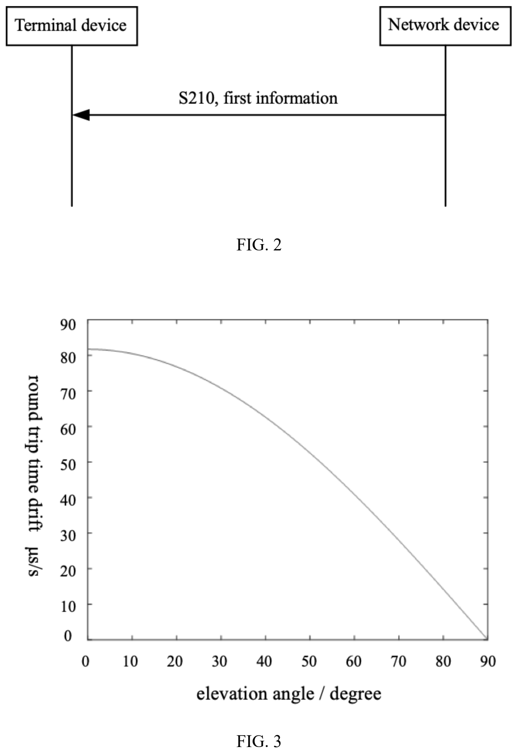

The following describes method embodiments of the present disclosure in conjunction with the accompanying drawings. FIG. 2 is a schematic flowchart of a method for wireless communication provided in an embodiment of the present disclosure. The method shown in FIG. 2 is introduced from the perspective of the interaction between the terminal device and the network device. The terminal device may be any of the terminal devices mentioned above, and the network device may be any of the network devices mentioned above.

The method shown in FIG. 2 may include operation S210, which is described in detail below.

At operation S210, the terminal device receives first information sent by the network device.

In some embodiments, the first information may be configuration information for joint channel estimation or may be used to indicate the configuration information for joint channel estimation.

In some embodiments, the first information may be used to indicate a length of a first time period. For example, the first information may directly indicate the length of the first time period, or may indicate the length of the first time period through information associated with the length of the first time period. As an example, the length of the first time period is associated with information A and information B, then the first information may indicate the length of the first time period through information A and information B. For another example, the first information may be the length of the first time period itself or information that is able to indicate the length of the first time period. If the length of the first time period is 6, for example, the first information may be 6 (e.g., 110). As another example, if in a prior agreement, 1 represents the case where the length of the first time period is 6, then the first information may also be 1. It should be noted that the first information and its indication methods provided here are merely exemplary, which are not limited in the present disclosure.

In some embodiments, the length of the first time period may be associated with DMRS bundling in joint channel estimation. For example, the length of the first time period may be used to indicate a duration of DMRS bundling. As an example, the length of the first time period may include one or more of: a segment length of segmented pre-compensation, a length of a nominal time domain window, and a length of an actual time domain window.

In different scenarios, the length of the first time period may include different information. In some cases, such as when no events described above occur within the nominal time domain window, the duration of DMRS bundling may be associated with the length of the nominal time domain window, and thus, the length of the first time period may include the length of the nominal time domain window. In other cases, such as when events described above occur within the nominal time domain window, or when the segmented pre-compensation technology is employed in joint channel estimation, the duration of DMRS bundling may be associated with the length of the actual time domain window, and therefore, the length of the first time period may include the length of the actual time domain window.

In some embodiments, the length of the actual time domain window may be determined based on one or more of: the length of the nominal time domain window, an event that destroys power consistency and/or phase continuity, and the segment length of segmented pre-compensation. For example, when no event that destroys power consistency and/or phase continuity occurs, the length of the actual time domain window may be determined based on the length of the nominal time domain window. For another example, when an event that destroys power consistency and/or phase continuity occurs, the length of the actual time domain window may be determined based on the length of the nominal time domain window and the event that destroys power consistency and/or phase continuity. For yet another example, if segmented pre-compensation is employed in joint channel estimation, the length of the actual time domain window may be determined based on the length of the nominal time domain window, the event that destroys power consistency and/or phase continuity, and the segment length of segmented pre-compensation.

The event that destroys power consistency and/or phase continuity may include one or more of, as described above, the timing error exceeding the upper bound, the phase difference greater than the maximum value for joint channel estimation, the Doppler shift error exceeding the limit, and the segmented pre-compensation update.

In some embodiments, the first information may be determined by the network device.

In some embodiments, in response to occurrence of the event that destroys power consistency and/or phase continuity, current DMRS bundling may be terminated. Meanwhile, the terminal device may determine, based on its capability information, whether to perform DMRS bundling again, i.e., whether to start a new time domain window and perform DMRS bundling within the new time domain window.

In the embodiments of the present disclosure, the configuration information (i.e., the first information) for joint channel estimation is determined by the network device, preventing the terminal device from frequently reporting information, which is conducive to reducing the overhead on the uplink channel.

In some cases, the network device needs to rely on some information reported by the terminal device to determine the first information. For example, the network device needs to determine the first information based on the time-frequency compensation update information from the terminal device. In this way, not only does the network device fail to obtain this information in a timely manner, but the terminal device also needs to occupy more time-frequency resources to report this information.

Therefore, in some embodiments, the network device may determine the first information based on an estimated value of information associated with the first information, or the network device may estimate the first information. For example, the first information may be associated with an estimated value of a first parameter, or the first information may be determined based on the estimated value of the first parameter.

The first parameter may be associated with a requirement for DMRS bundling in joint channel estimation. As mentioned above, joint channel estimation imposes requirements on ranges of certain parameters. These parameters may include a timing error, a Doppler shift error, and a phase difference. Therefore, the first parameter may include one or more of the timing error, the Doppler shift error, and the phase difference.

In some embodiments, the estimated value of the first parameter may be associated with delay drift and/or Doppler shift. If the first parameter is the phase difference, the estimated value of the first parameter may be associated with both delay drift and Doppler shift. If the first parameter is the Doppler shift error, the estimated value of the first parameter may be associated with the Doppler shift. If the first parameter is the timing error, the estimated value of the first parameter may be associated with the delay drift.

Taking the first parameter being the phase difference as an example, a relationship between a phase difference between OFDM symbols received by the base station and the delay drift is as follows:

$$\Delta \emptyset = \Delta T_{drift} \times F_s \times 360 \text{ degrees}$$

where $\Delta T_{drift}$ represents an amount of delay drift, and $F_s = \dfrac{\Delta f}{2}$ is half of a transmission bandwidth.

A relationship between the phase difference between the OFDM symbols received by the base station and a variation of Doppler shift is as follows:

$$\varphi = 2\pi * f_{Doppler} * t$$

where $f_{Doppler}$ represents the variation of Doppler shift, and t represents a time difference between two transmission symbols.

In some embodiments, the method shown in FIG. 2 may be applied to NTN networks. Based on orbital determination and movement characteristics of satellites, the delay drift and Doppler shift of the NTN network show regular changes. Therefore, based on the movement characteristics of satellites, the changes in delay drift and Doppler shift are predictable. In other words, based on the satellite's movement characteristics, predictive values of changes in delay drift and Doppler shift may be obtained.

In some embodiments, delay drift and Doppler shift are associated with an elevation angle of the satellite. For example, a bidirectional transmission delay decreases as the elevation angle increases. For another example, within a certain period of time, the variation of Doppler shift increases as the elevation angle increases. The elevation angle of the satellite mentioned here may refer to an elevation angle of the satellite relative to the terminal device, an elevation angle of the satellite relative to the network device, or an elevation angle of the satellite relative to a specific point within the cell.

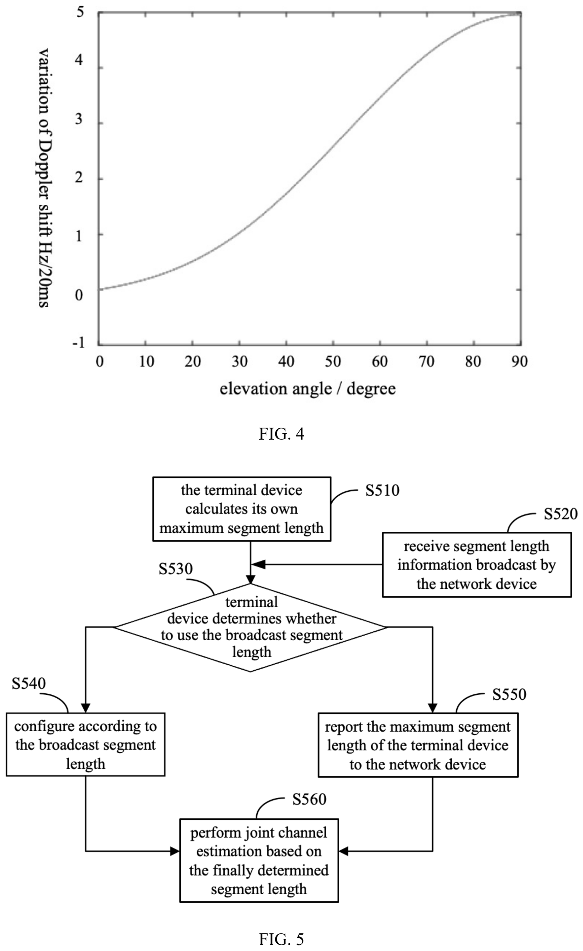

Taking a LEO satellite at an altitude of 1200 km as an example, assuming that elevation angles (denoted as 0) relative to the terminal device and the network device are the same, and that the elevation angle remains constant over a short period (measured in milliseconds), FIG. 3 shows a schematic diagram of a relationship between the bidirectional transmission delay and the elevation angle, and FIG. 4 shows a schematic diagram of a relationship between the variation of Doppler shift in 20 ms and the elevation angle.

It should be noted that when the elevation angles are not the same, it is sufficient to calculate the delay drift and the variation of Doppler shift for a feeder link and a user link separately.

Additionally, the elevation angle mentioned above may vary regularly with the movement of the satellite. Based on this, the predictive values of changes in delay drift and Doppler shift may be obtained according to the relationship between the satellite's movement pattern and the elevation angle, as well as the relationship between the elevation angle and the delay drift and Doppler shift.

In the embodiments of the present disclosure, the network device may determine the first information by predicting relevant information associated with joint channel estimation, which helps the network device to timely acquire relevant information for reasonable configuration of joint channel estimation, and meanwhile, eliminates the need for the terminal device to report relevant information, thereby saving time-frequency resources.

Taking a satellite communication system as an example, when a position and capability of the terminal device, a position of the network device, and a motion state of the satellite are all known, the first parameter may be determined through the above method, thereby determining the first information. However, the network device typically cannot obtain an exact position of the terminal device.

In some embodiments, a reference point may be selected within a current serving cell to represent the position of the terminal device. The reference point may also be referred to as a reference position of the terminal device. Since a beam radius of the satellite is generally much smaller compared to the satellite's altitude (e.g., a beam radius of a LEO-1200km Set-1 satellite is typically around 45 km) (i.e., 45 km is smaller compared to 1200 km), the first information determined based on the reference point does not differ significantly from first information of terminal devices with the same capabilities at other positions within the cell.

To ensure that the first information is as applicable as possible to the terminal devices within the current serving cell, and to avoid situations where certain parameters (such as the first parameter) exceed the limit during joint channel estimation based on the first information, a point with poorer parameter conditions required for joint channel estimation may be selected as the reference point.

Taking the first parameter being the phase difference as an example, since joint channel estimation limits the maximum value of the phase difference, a point with the largest phase difference within the cell may be selected as the reference point. In this way, most terminal devices within the current serving cell do not exceed the requirements of joint channel estimation when performing joint channel estimation based on the first information determined according to this reference point.

As mentioned above, in NTN networks, parameters required for joint channel estimation corresponding to different satellite elevation angles may vary. Therefore, as an implementation, the reference point may be determined based on the satellite elevation angle in the current serving cell. For example, it may be determined whether to use a certain point in the current serving cell as the reference point based on a size of the satellite elevation angle at the point.

In NTN networks, a primary factor limiting coverage is the power loss due to path loss. When the elevation angle of the satellite relative to the terminal device is small, the path loss between the satellite and the terminal device is large, resulting in a significant phase difference. Therefore, the point with the smallest elevation angle within the current serving cell may be selected as the reference point.

For terminal devices with different capabilities, maximum segment lengths allowed for segmented pre-compensation may vary, which affects respective lengths of time domain windows for DMRS bundling in joint channel estimation. Thus, to ensure that the first information is as applicable as possible to all terminal devices within the current serving cell, a terminal device with the lower capability may be used as a reference to determine the first information. For example, the current serving cell may include a first terminal device and a second terminal device, and the first information may be determined by the network device based on the first terminal device, where a capability of the first terminal device is lower than that of the second terminal device. For ease of implementation, as another example, a terminal device without the time-frequency compensation capability may be used as a reference.

The capability of the terminal device may include one or more of: a capability of maintaining phase continuity and power consistency, a residual error after timing adjustment, an antenna switching capability, etc.

The first information may be carried in various types of information or sent through multiple methods. For example, the first information may be sent via one or more of: a broadcast message, RRC signaling, and downlink control information (DCI). In satellite communications, path loss is the primary factor affecting coverage capability. Therefore, terminal devices with the same transmit power within a cell have similar coverage capabilities, and the coverage gain required by these terminals may also be relatively close. Thus, configuring the first information to all terminals within the cell via broadcasting has good performance and helps reduce signaling overhead.

The length of the second time period may be associated with DMRS bundling in joint channel estimation, such as being associated with the length of the actual time domain window mentioned above. As an example, the length of the second time period may be the segment length of segmented pre-compensation, such as the maximum segment length, or information associated with the segment length of segmented pre-compensation.

It should be noted that the length of the second time period is the information determined by the terminal device and corresponding to the length of the first time period. For example, the length of the first time period is the segment length of segmented pre-compensation determined by the network device, then the length of the second time period is the segment length of segmented pre-compensation determined by the terminal device.

To implement joint channel estimation, both the network device and the terminal device need to have the same understanding of the length of the first time period.

If the length of the first time period matches the length of the second time period, meaning that the terminal device is able to perform joint channel estimation based on the length of the first time period configured by the network device, then joint channel estimation may be performed based on the length of the first time period.

As an implementation, the terminal device may report to the network device whether to use the length of the first time period. For example, a flag bit may be used to indicate whether to use the length of the first time period. As an example, a flag bit of " 1" may indicate that the length of the first time period is used for joint channel estimation, while a flag value of "0" may indicate that the length of the first time period is not used for joint channel estimation. The above example is provided for illustrative purposes only, which is not limited in the present disclosure.

As another implementation, the terminal device may indicate the use of the length of the first time period for joint channel estimation by not reporting relevant information. For example, the method shown in FIG. 2 may further include operation S220.

At operation S220, in response to the terminal device not sending a response message for the first information to the network device within a preset time, joint channel estimation is performed based on the length of the first time period. The preset time may be determined based on usage requirements, which is not limited in the present disclosure.

In the embodiments of the present disclosure, the terminal device indicates the use of the length of the first time period for joint channel estimation by not reporting relevant information, which means this method does not require any additional signaling interaction, effectively saving signaling resources.

If the length of the first time period does not match the length of the second time period, e.g., the length of the second time period being greater than the length of the first time period, then the terminal device may perform joint channel estimation based on the length of the second time period to achieve better performance. In this case, the method shown in FIG. 2 may further include operations S230 and S240.

At operation S230, the terminal device sends second information to the network device. The second information is used to indicate the length of the second time period.

At operation S240, joint channel estimation is performed based on the length of the second time period.

As an implementation, the second information may directly indicate the length of the second time period, such as the second information being the length of the second time period. For example, if the length of the second time period is 9 time slots, then the second information may be 9 (i.e., 1001), requiring 4 bits of resources.

As another implementation, the second information may indirectly indicate the length of the second time period, such as the second information being a difference between the length of the first time period and the length of the second time period. Still taking the length of the second time period being 9 time slots as an example, if the length of the first time period is 6 time slots, then the second information may be 3 (i.e., 11), requiring 2 bits of resources.

In the embodiments of the present disclosure, indicating the length of the second time period through the difference between the lengths of the first time period and the second time period helps save resources. In the above example, this method may save 2 bits of resources.

In some cases, coverage capabilities of certain terminal devices may meet the requirements without needing to use joint channel estimation to enhance coverage.

For such terminal devices, if they receive the length of the first time period configured by the network device, they need to inform the network device that they do not require joint channel estimation. That is, the method shown in FIG. 2 may further include operation S250.

At operation S250, the terminal device sends third information to the network device.

The third information may be used to indicate that the terminal device does not perform joint channel estimation.

In some embodiments, the third information may be determined based on the coverage capability of the terminal device. The parameter associated with the coverage capability of the terminal device may include reference signal receiving power (RSRP).

For example, the third information may be determined based on a comparison result between a measurement value of the RSRP of the terminal device and a threshold of the RSRP. As an example, when the measurement value of the RSRP of the terminal device is greater than or equal to the threshold of the RSRP, the terminal device may be indicated via the third information not to perform joint channel estimation. The threshold of the RSRP mentioned here is an RSRP value corresponding to a target coverage capability of the terminal device, and the threshold of the RSRP may be determined based on usage conditions, which is not limited in the present disclosure.

As mentioned above, the phase difference is associated with delay drift and Doppler shift. Referring back to FIG. 4, it is seen that when the elevation angle is small, the variation of Doppler shift is also small. Therefore, when the elevation angle is small, the phase difference caused by Doppler shift may be ignored to simplify the process of determining the first information.

The following provides an exemplary introduction to the method provided in the embodiments of the present disclosure, applied to NTN networks, where the length of the first time period is the segment length of segmented pre-compensation, in conjunction with FIG. 5 and the following three embodiments.

Embodiment 1

In this embodiment, the method for wireless communication may include operations S101 to S104.

At operation S101, the network device calculates the maximum segment length allowed for a terminal with poor capability at the reference point when performing segmented pre-compensation based on the satellite's own position and its relative position to the serving cell, i.e., the length of the first time period mentioned above. The network device may broadcast this segment length value to all terminal devices within the beam (the beam may refer to the cell in the satellite communication network).

In this embodiment, it is assumed that both the elevation angle of the reference point relative to the satellite and the elevation angle of the base station relative to the satellite are 30°, and the reference terminal has a timing error of 12Ts after timing adjustment. At this time, taking 2 physical resource blocks (PRB) as an example, without considering pre-compensation or post-compensation for delay and phase, the variation of Doppler shift is approximately 1Hz/20ms, having a negligible impact, which will not exceed the error for at least 12 time slots and thus can be ignored; the delay drift is approximately 70.8ppm, considering the residual error from the last timing adjustment, it will not exceed the timing error limit for at most 7 time slots if no timing adjustment is performed; and the phase difference caused by delay drift is $\Delta\varnothing =$ 70.8nm/ms $\times$ 180kHz $\times$ 160=4.59degree/ms , which may maintain for at most 6 time slots without exceeding the phase continuity limit. Therefore, the network device should broadcast the segment length for segmented pre-compensation as 6 for all terminal devices within the beam.

At operation S102, the terminal device may estimate, combined with its own capabilities, the maximum segment length it can configure for segmented pre-compensation in a short term based on its own position and the motion state of the satellite.

In this embodiment, terminal device A calculates the maximum segment length allowed for its own segmented pre-compensation. Considering the cell range, an elevation angle of the satellite relative to terminal device A may be 31°, and other parameters are the same as those in operation S101. At this time, the variation of Doppler shift is approximately 1.1Hz/20ms, which has a negligible impact and can be ignored. The delay drift is approximately 70.0ppm, considering the residual error from the last timing adjustment, it will not exceed the timing error limit for at most 7 time slots if no adjustment is performed. The phase difference caused by delay drift is $\Delta\varnothing =$ 70nm/ms $\times$ 180kHz $\times$ 160=4.54degree/ms, which may maintain for at most 6 time slots without exceeding the phase continuity limit. Therefore, the maximum segment length calculated by terminal device A for its own segmented pre-compensation is 6.

At operation S103, the terminal device uses the segment length broadcast by the network device to perform segmented pre-compensation and performs DMRS bundling within the pre-compensation segment.

In this embodiment, the maximum segment length for segmented pre-compensation calculated by terminal device A is consistent with the pre-compensation segment length broadcast by the network device, so terminal device A does not need to report additional information. Terminal device A performs segmented pre-compensation according to the segment length of 6 time slots and performs DMRS bundling within the segment.

At operation S104, the network device performs joint channel estimation on signals transmitted by the terminal device according to the broadcast segment length.

If the network device does not receive segment length correction information uploaded by terminal device A within a certain period, the network device performs joint channel estimation on terminal device A through the signals transmitted by the uplink channel according to the broadcast segment length. It should be noted that this process is compatible with an actual TDW mechanism defined in R17.

In this embodiment, the network device may determine the segment length information for segmented pre-compensation based on the movement characteristics of the satellite, which helps achieve reasonable configuration of the time domain window for the DMRS bundling by the network device. At the same time, both the terminal device and the network device are able to achieve a common understanding of the segmented pre-compensation segment length without the need for additional signaling interactions, thereby effectively saving signaling.

Embodiment 2

In this embodiment, the method for wireless communication may include operations S301 to S304.

At operation S301, the network device calculates the maximum segment length allowed for a terminal device with poor capability at the reference point when performing segmented pre-compensation based on the satellite's own position and its relative position to the serving cell, and the network device may broadcast this segment length value to all terminal devices within the beam.

In this embodiment, it is assumed that both the elevation angle of the reference point relative to the satellite and the elevation angle of the network device relative to the satellite are 30°, and the reference terminal device has a timing error of 12Ts after timing adjustment. At this time, taking 2 PRB as an example, without considering pre-compensation or post-compensation for delay and phase, the variation of Doppler shift is approximately 1Hz/20ms, having a negligible impact, which will not exceed the error for at least 32 time slots and thus can be ignored; the delay drift is approximately 70.8ppm, considering the residual error from the last timing adjustment, it will not exceed the timing error limit for at most 7 time slots if no timing adjustment is performed; and the phase difference caused by delay drift is $\Delta\varnothing = 70.8nm/ms \times 180kHz \times 360=4.59degree/ms$, which may maintain for at most 6 time slots without exceeding the phase continuity limit. Therefore, the network device should broadcast the segment length for segmented pre-compensation as 6 for all terminal devices within the beam.

At operation S302, the terminal device estimates, combined with its own capabilities, the maximum segment length allowed for its own segmented pre-compensation based on its own position and the motion state of the satellite.

In this embodiment, terminal device B calculates the maximum segment length allowed for its own segmented pre-compensation. Considering the satellite range, an elevation angle of terminal device B may be 31°, and terminal device B has a timing error of 8Ts after adjustment and has the capability for phase pre-compensation. At this time, taking 2 PRB as an example, the variation of Doppler shift is approximately 1.1Hz/20ms, having a negligible impact, which will not exceed the error for at least 32 time slots and thus can be ignored; and the delay drift is approximately 70ppm, considering the residual error from the last timing adjustment, it will not exceed the timing error limit for at most 9 time slots if no timing adjustment is performed. Since terminal device B has the capability for phase pre-compensation, it will not exceed the phase continuity limit for 9 time slots. Therefore, the maximum segment length calculated by terminal device B for its own segmented pre-compensation is 9.

At operation S303, the terminal device determines and decides to perform segmented pre-compensation based on its maximum segment length that it can maintain, performs DMRS bundling within the segment, and reports a difference between its segment length and the broadcast segment length to the network device.

In this embodiment, the maximum segment length for segmented pre-compensation of terminal device B is significantly longer than the segment length broadcast by the network device, allowing for a noticeable gain. Terminal device B may choose to perform segmented pre-compensation with its maximum segment length of 9 time slots and perform DMRS bundling within the segment. Additionally, terminal device B needs to report the variation of 3 time slots in its segment length compared to the broadcast segment length to the network device.

At operation S304, the network device receives the segment length variation information reported by the terminal device and performs joint channel estimation on the signals transmitted by the terminal device based on the broadcast segment length and the variation reported by the terminal device.

In this embodiment, after the network device receives the variation reported by terminal device B, the network device adds the broadcast segment length of 6 and the variation of 3 to obtain 9 time slots as the segment length for segmented pre-compensation for terminal device B and performs joint channel estimation on the signals transmitted by terminal device B based on this value. It should be noted that this process is compatible with the actual TDW mechanism defined in R17.

In embodiments od the present disclosure, this helps terminal devices with stronger capabilities to achieve longer pre-compensation segment lengths, thereby improving the performance of joint channel estimation. Additionally, by only reporting the difference in pre-compensation segment lengths, signaling is saved.

Embodiment 3

In this embodiment, the method for wireless communication may include operations S401 to S404.

At operation S401, the network device calculates the maximum segment length allowed for a terminal device with poor capability at the reference point when performing segmented pre-compensation based on the satellite's own position and its relative position to the serving cell, and the network device may broadcast this segment length value to all terminal devices within the beam.

In this embodiment, it is assumed that both the elevation angle of the reference point relative to the satellite and the elevation angle of the network device relative to the satellite are 30°, and the reference terminal device has a timing error of 12Ts after timing adjustment. At this time, taking 2 PRB as an example, without considering pre-compensation or post-compensation for delay and phase, the variation of Doppler shift is approximately 1Hz/20ms, having a negligible impact, which will not exceed the error for at least 32 time slots and thus can be ignored; the delay drift is approximately 70.8ppm, considering the residual error from the last timing adjustment, it will not exceed the timing error limit for at most 7 time slots if no timing adjustment is performed; and the phase difference caused by delay drift is $\Delta\varnothing = \Delta\varnothing = 70.8nm/ms \times 180kHz \times 360=4.59degree/ms$, which may maintain for at most 6 time slots without exceeding the phase continuity limit. Therefore, the network device should broadcast the segment length for segmented pre-compensation as 6 for all terminal devices within the beam.

At operation S402, the terminal device estimates, combined with its own capabilities, the maximum segment length allowed for its own segmented pre-compensation based on its own position and the motion state of the satellite.

In this embodiment, terminal device C calculates the maximum segment length allowed for its own segmented pre-compensation. Considering the cell range, an elevation angle of the satellite relative to terminal device C may be 31°, and other parameters are the same as those in S401. At this time, the variation of Doppler shift is approximately 1.1Hz/20ms, which has a negligible impact and can be ignored. The delay drift is approximately 70.0ppm; considering the residual error from the last timing adjustment, it will not exceed the timing error limit for at most 7 time slots if no adjustment is performed. The phase difference caused by delay drift is 70nm/ms × 180kHz × 360=4.54degree/ms, which may maintain for at most 6 time slots without exceeding the phase continuity limit. Therefore, the maximum segment length calculated by terminal device C for its own segmented pre-compensation is 6.

At operation S403, the terminal device determines that segmented pre-compensation is not needed and performs PUSCH uplink transmission under normal conditions.

In this embodiment, terminal device C determines that it is able to meet coverage requirements without DMRS bundling. This determination may be based on measuring RSRP and comparing it with the corresponding RSRP threshold or based on other feasible methods. Terminal device C chooses not to perform segmented pre-compensation and informs the network device of this information. Terminal device C performs PUSCH uplink transmission under normal conditions without segmented pre-compensation.

At operation S404, the network device acquires the behavior of terminal device C not performing segmented pre-compensation by receiving the information reported by terminal device C. The network device normally receives and demodulates the signals transmitted by terminal device C without performing joint channel estimation.

In this embodiment, the network device learns from the information reported by terminal device C that it is not performing segmented pre-compensation. The network device does not need to perform joint channel estimation and normally receives and demodulates the signals transmitted by terminal device C.

FIG. 5 is another schematic flowchart of a method for wireless communication provided in an embodiment of the present disclosure. The method shown in FIG. 5 may include operations S510 to S560.

At operation S510, the terminal device calculates its own maximum segment length. This segment length may be the segment length of the segmented pre-compensation.

At operation S520, the terminal device receives segment length information broadcast by the network device. This segment length may be determined by the network device.

At operation S530, the terminal device determines whether to use the broadcast segment length. For example, it may be determined whether to use the broadcast segment length by comparing the terminal device's own maximum segment length at operation S510 with the broadcast segment length information at operation S520.

If the broadcast segment length is used, the process proceeds to operation S540. If the maximum segment length calculated by the terminal device is used, the process proceeds to operation S550.

At operation S540, configuration is performed based on the broadcast segment length. In some embodiments, no additional signaling interaction is required in this case, thereby saving signaling.

At operation S550, the terminal device reports its maximum segment length to the network device. In some embodiments, the terminal device may report the difference between its maximum segment length and the segment length broadcast by the network device to save signaling.

At operation S560, joint channel estimation is performed based on the finally determined segment length.

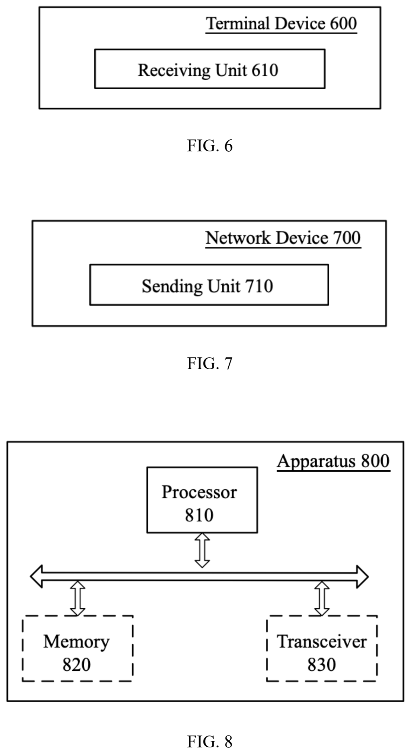

The above method embodiments have been described in detail in conjunction with FIG. 1 to FIG. 5. The following describes the apparatus embodiments of the present disclosure in detail in conjunction with FIG. 6 to FIG. 8. It should be understood that the description of the method embodiments corresponds to the description of the apparatus embodiments. Therefore, parts that are not described in detail may refer to the previous method embodiments.

FIG. 6 is a schematic structural diagram of a terminal device provided in an embodiment of the present disclosure. The terminal device 600 shown in FIG. 6 may include a receiving unit 610.

The receiving unit 610 may be configured to receive first information sent by a network device, where the first information is used to indicate a length of a first time period, and the length of the first time period is associated with joint channel estimation, and where the first information is determined by the network device.

Optionally, the length of the first time period may include one or more of: a segment length of segmented pre-compensation, a length of a nominal time window, and a length of an actual time window.

Optionally, the length of the actual time window may be determined based on one or more of: the length of the nominal time window, an event that destroys power consistency and/or phase continuity, and the segment length of the segmented pre-compensation.

Optionally, the terminal device may further include: a terminating unit, configured to terminate current DMRS bundling in response to occurrence of the event; and a determining unit, configured to determine whether to perform DMRS bundling again based on capability information of the terminal device.

Optionally, the first information is associated with an estimated value of a first parameter, where the first parameter is associated with a requirement for the DMRS bundling.

Optionally, the first parameter may include one or more of: a timing error, a Doppler shift error, and a phase difference.

Optionally, the estimated value of the first parameter is associated with delay drift and/or Doppler shift.

Optionally, the delay drift and/or the Doppler shift is determined based on a movement characteristic of a satellite.

Optionally, the first information is determined by the network device based on a reference point in a current serving cell.

Optionally, the reference point is determined by an elevation angle of a satellite in the current serving cell.

Optionally, the current serving cell includes a first terminal device and a second terminal device, where the first information is determined by the network device based on the first terminal device, and a capability of the first terminal device is lower than a capability of the second terminal device.

Optionally, the first information is sent via one or more of: a broadcast message, radio resource control (RRC) signaling, and downlink control information (DCI).

Optionally, the terminal device may further include: a first processing unit, configured to perform the joint channel estimation based on the length of the first time period.

Optionally, the first processing unit is configured to perform the joint channel estimation based on the length of the first time period in response to that the terminal device does not send a response message for the first information to the network device within a preset time.

Optionally, the terminal device may further include: a first sending unit, configured to send second information to the network device, where the second information is used to indicate the length of a second time period; and a second processing unit, configured to perform the joint channel estimation based on the length of the second time period.

Optionally, the terminal device determines the length of the second time period based on one or more of: location information of the terminal device, capability information of the terminal device, location information of the network device, and motion state information of a satellite.

Optionally, the second information is a difference between the length of the first time period and the length of the second time period.

Optionally, the terminal device may further include: a second sending unit, configured to send third information to the network device, where the third information is used to indicate that the terminal device does not perform the joint channel estimation.

Optionally, the third information is determined based on a coverage capability of the terminal device.

Optionally, the coverage capability of the terminal device is associated with the reference signal received power (RSRP).

Optionally, the terminal device is applied to a non-terrestrial communication network.

Optionally, the receiving unit 610 may be a transceiver 830. The terminal device 600 may further include a processor 810 and a memory 820, as shown in FIG. 8.

FIG. 7 is a schematic structural diagram of a network device provided in an embodiment of the present disclosure. The network device 700 shown in FIG. 7 may include a sending unit 710.

The sending unit 710 may be configured to send first information to a terminal device, where the first information is used to indicate a length of a first time period, and the length of the first time period is associated with joint channel estimation, and where the first information is determined by the network device.

Optionally, the length of the first time period may include one or more of: a segment length of segmented pre-compensation, a length of a nominal time window, and a length of an actual time window.

Optionally, the length of the actual time window may be determined based on one or more of: the length of the nominal time window, an event that destroys power consistency and/or phase continuity, and the segment length of the segmented pre-compensation.

Optionally, the network device may further include: a terminating unit, configured to terminate current DMRS bundling in response to occurrence of the event; and a determining unit, configured to determine whether to perform DMRS bundling again based on capability information of the terminal device.

Optionally, the first information is associated with an estimated value of a first parameter, where the first parameter is associated with a requirement for the DMRS bundling.

Optionally, the first parameter may include one or more of: a timing error, a Doppler shift error, and a phase difference.

Optionally, the estimated value of the first parameter is associated with delay drift and/or Doppler shift.

Optionally, the delay drift and/or the Doppler shift is determined based on a movement characteristic of a satellite.

Optionally, the first information is determined by the network device based on a reference point in a current serving cell.

Optionally, the reference point is determined by an elevation angle of a satellite in the current serving cell.

Optionally, the current serving cell includes a first terminal device and a second terminal device, where the first information is determined by the network device based on the first terminal device, and a capability of the first terminal device is lower than a capability of the second terminal device.

Optionally, the first information is sent via one or more of: a broadcast message, radio resource control (RRC) signaling, and downlink control information (DCI).

Optionally, the network device may further include: a first processing unit, configured to perform the joint channel estimation based on the length of the first time period.

Optionally, the first processing unit is configured to perform the joint channel estimation based on the length of the first time period in response to that the network device does not receive a response message sent by the terminal device for the first information within a preset time.

Optionally, the network device may further include: a first receiving unit, configured to receive second information sent by the terminal device, where the second information is used to indicate a length of a second time period; and a second processing unit, configured to perform the joint channel estimation based on the length of the second time period.

Optionally, the terminal device determines the length of the second time period based on one or more of: location information of the terminal device, capability information of the terminal device, location information of the network device, and motion state information of a satellite.

Optionally, the second information is a difference between the length of the first time period and the length of the second time period.

Optionally, the network device may further include: a second receiving unit, configured to receive third information sent by the terminal device, where the third information is used to indicate that the terminal device does not perform the joint channel estimation.

Optionally, the third information is determined based on a coverage capability of the terminal device.

Optionally, the coverage capability of the terminal device is associated with the reference signal received power (RSRP).

Optionally, the network device is applied to a non-terrestrial communication network.

Optionally, the sending unit 710 may be a transceiver 830. The network device 700 may further include a processor 810 and a memory 820, as shown in FIG. 8.

FIG. 8 is a schematic structural diagram of an apparatus for communication according to an embodiment of the present disclosure. The dashed line in FIG. 8 indicates that the unit or module is optional. The apparatus 800 may be configured to implement the method described in the foregoing method embodiments. The apparatus 800 may be a chip, a terminal device, or a network device.

The apparatus 800 may include one or more processors 810, and the processor 810 may support the apparatus 800 to implement the method described in the foregoing method embodiments. The processor 810 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 800 may further include one or more memories 820 storing a program, and the program may be executed by the processor 810 to cause the processor 810 to perform the method described in the foregoing method embodiments. The memory 820 may be independent of the processor 810 or may be integrated into the processor 810.

The apparatus 800 may further include a transceiver 830, and the processor 810 may communicate with another device or chip via the transceiver 830. For example, the processor 810 may perform data transceiving with another device or chip via the transceiver 830.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" in the present disclosure may be used interchangeably. In addition, the terms used in the present disclosure are merely used to explain specific embodiments of the present disclosure and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

The term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" means that B is associated with A and B may be determined by A. However, it should also be understood that determining B based on A does not mean determining B only based on A, but that B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" or "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communication system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In various embodiments of the present disclosure, a size of a serial number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for wireless communication, comprising:
   receiving, by a terminal device, first information sent by a network device, wherein the first information is used to indicate a length of a first time period, and the length of the first time period is associated with joint channel estimation; and wherein the first information is determined by the network device.

2. The method according to claim 1, wherein the length of the first time period includes one or more of:

   a segment length of segmented pre-compensation;
   a length of a nominal time domain window; and
   a length of an actual time domain window.

3. The method according to claim 2, wherein the length of the actual time domain window is determined based on one or more of:

   the length of the nominal time domain window;
   an event that destroys one or both of power consistency and phase continuity; and
   the segment length of the segmented pre-compensation.

4. The method according to claim 3, further comprising:

   terminating current demodulation reference signal, DMRS, bundling in response to occurrence of the event; and
   determining whether to perform DMRS bundling again based on capability information of the terminal device.

5. The method according to any one of claims 1 to 4, wherein the first information is associated with an estimated value of a first parameter, and the first parameter is associated with a requirement for the DMRS bundling.

6. The method according to claim 5, wherein the first parameter includes one or more of:

   a timing error;
   a Doppler shift error; and
   a phase difference.

7. The method according to claim 5 or claim 6, wherein the estimated value of the first parameter is associated with one or both of delay drift and Doppler shift.

8. The method according to claim 7, wherein one or both of the delay drift and the Doppler shift are determined based on a movement characteristic of a satellite.

9. The method according to any one of claims 1 to 8, wherein the first information is determined by the network device based on a reference point in a current serving cell.

10. The method according to claim 9, wherein the reference point is determined by an elevation angle of a satellite in the current serving cell.

11. The method according to any one of claims 1 to 10, wherein the current serving cell includes a first terminal device and a second terminal device; and wherein the first information is determined by the network device based on the first terminal device, and a capability of the first terminal device is lower than a capability of the second terminal device.

12. The method according to any one of claims 1 to 11, wherein the first information is sent via one or more of: a broadcast message, radio resource control, RRC, signaling, and downlink control information, DCI.

13. The method according to any one of claims 1 to 12, further comprising:
    performing the joint channel estimation based on the length of the first time period in response to that the terminal device does not send a response message for the first information to the network device within a preset time.

14. The method according to any one of claims 1 to 12, further comprising:

sending, by the terminal device, second information to the network device, wherein the second information is used to indicate a length of a second time period; and

performing the joint channel estimation based on the length of the second time period.

15. The method according to claim 14, wherein the terminal device determines the length of the second time period based on one or more of:

location information of the terminal device;
capability information of the terminal device;
location information of the network device; and
motion state information of a satellite.

16. The method according to claim 14 or claim 15, wherein the second information is a difference between the length of the first time period and the length of the second time period.

17. The method according to any one of claims 1 to 12, further comprising:
sending, by the terminal device, third information to the network device, wherein the third information is used to indicate that the terminal device does not perform the joint channel estimation.

18. The method according to claim 17, wherein the third information is determined based on a comparison result between a measurement value of a reference signal received power, RSRP, of the terminal device and a threshold of the RSRP.

19. The method according to any one of claims 1 to 18, wherein the method is applied to a non-terrestrial communication network.

20. A method for wireless communication, comprising:
sending, by a network device, first information to a terminal device, wherein the first information is used to indicate a length of a first time period, and the length of the first time period is associated with joint channel estimation; and wherein the first information is determined by the network device.

21. The method according to claim 20, wherein the length of the first time period includes one or more of:

a segment length of segmented pre-compensation;
a length of a nominal time domain window; and
a length of an actual time domain window.

22. The method according to claim 21, wherein the length of the actual time domain window is determined based on one or more of:

the length of the nominal time domain window;
an event that destroys one or both of power consistency and phase continuity; and
the segment length of the segmented pre-compensation.

23. The method according to claim 22, further comprising:

terminating current demodulation reference signal, DMRS, bundling in response to occurrence of the event; and
determining whether to perform DMRS bundling again based on capability information of the terminal device.

24. The method according to any one of claims 20 to 23, wherein the first information is associated with an estimated value of a first parameter, and the first parameter is associated with a requirement for DMRS bundling of the joint channel estimation.

25. The method according to claim 24, wherein the first parameter includes one or more of:

a timing error;
a Doppler shift error; and
a phase difference.

26. The method according to claim 24 or claim 25, wherein the estimated value of the first parameter is associated with one or both of delay drift and Doppler shift.

27. The method according to claim 26, wherein one or both of the delay drift and the Doppler shift are determined based on a movement characteristic of a satellite.

28. The method according to any one of claims 20 to 27, wherein the first information is determined by the network device based on a reference point in a current serving cell.

29. The method according to claim 28, wherein the reference point is determined by an elevation angle of a satellite in the current serving cell.

30. The method according to any one of claims 20 to 29, wherein the current serving cell includes a first terminal device and a second terminal device; and wherein the first information is determined by the network device based on the first terminal device, and a capability of the first terminal device is lower than a capability of the second terminal device.

31. The method according to any one of claims 20 to 30, wherein the first information is sent via one or more of: a broadcast message, radio resource control, RRC, signaling, and downlink control information, DCI.

32. The method according to any one of claims 20 to 31, further comprising:
performing the joint channel estimation based on the length of the first time period in response to that the network device does not receive a response message sent by the terminal device for the first information within a preset time.

33. The method according to any one of claims 20 to 31, further comprising:

receiving, by the network device, second information sent by the terminal device, wherein the second information is used to indicate a length of a second time period; and
performing the joint channel estimation based on the length of the second time period.

34. The method according to claim 33, wherein the terminal device determines the length of the second time period based on one or more of:

location information of the terminal device;
capability information of the terminal device;
location information of the network device; and
motion state information of a satellite.

35. The method according to claim 33 or claim 34, wherein the second information is a difference between the length of the first time period and the length of the second time period.

36. The method according to any one of claims 20 to 31, further comprising:
receiving, by the network device, third information sent by the terminal device, wherein the third information is used to indicate that the terminal device does not perform the joint channel estimation.

37. The method according to claim 36, wherein the third information is determined based on a comparison result between a measurement value of a reference signal received power, RSRP, of the terminal device and a threshold of the RSRP.

38. The method according to any one of claims 20 to 37, wherein the method is applied to a non-terrestrial communication network.

39. A terminal device, comprising:
a receiving unit, configured to receive first information sent by a network device, wherein the first information is used to indicate a length of a first time period, and the length of the first time period is associated with joint channel estimation; and wherein the first information is determined by the network device.

40. The terminal device according to claim 39, wherein the length of the first time period includes one or more of:

a segment length of segmented pre-compensation;

a length of a nominal time domain window; and
a length of an actual time domain window.

41. The terminal device according to claim 40, wherein the length of the actual time domain window is determined based on one or more of:

the length of the nominal time domain window;
an event that destroys one or both of power consistency and phase continuity; and
the segment length of the segmented pre-compensation.

42. The terminal device according to claim 41, further comprising:

a terminating unit, configured to terminate current demodulation reference signal, DMRS, bundling in response to occurrence of the event; and
a determining unit, configured to determine whether to perform DMRS bundling again based on capability information of the terminal device.

43. The terminal device according to any one of claims 39 to 42, wherein the first information is associated with an estimated value of a first parameter, and the first parameter is associated with a requirement for the DMRS bundling.

44. The terminal device according to claim 43, wherein the first parameter includes one or more of:

a timing error;
a Doppler shift error; and
a phase difference.

45. The terminal device according to claim 43 or claim 44, wherein the estimated value of the first parameter is associated with one or both of delay drift and Doppler shift.

46. The terminal device according to claim 45, wherein one or both of the delay drift and the Doppler shift are determined based on a movement characteristic of a satellite.

47. The terminal device according to any one of claims 39 to 46, wherein the first information is determined by the network device based on a reference point in a current serving cell.

48. The terminal device according to claim 47, wherein the reference point is determined by an elevation angle of a satellite in the current serving cell.

49. The terminal device according to any one of claims 39 to 48, wherein the current serving cell includes a first terminal device and a second terminal device; and wherein the first information is determined by the network device based on the first terminal device, and a capability of the first terminal device is lower than a capability of the second terminal device.

50. The terminal device according to any one of claims 39 to 49, wherein the first information is sent via one or more of: a broadcast message, radio resource control, RRC, signaling, and downlink control information, DCI.

51. The terminal device according to any one of claims 39 to 50, further comprising:
a first processing unit, configured to perform the joint channel estimation based on the length of the first time period in response to that the terminal device does not send a response message for the first information to the network device within a preset time.

52. The terminal device according to any one of claims 39 to 50, further comprising:

a first sending unit, configured to send second information to the network device, wherein the second information is used to indicate a length of a second time period; and
a second processing unit, configured to perform the joint channel estimation based on the length of the second time period.

53. The terminal device according to claim 52, wherein the terminal device determines the length of the second time period based on one or more of:

> location information of the terminal device;
> capability information of the terminal device;
> location information of the network device; and
> motion state information of a satellite.

54. The terminal device according to claim 52 or claim 53, wherein the second information is a difference between the length of the first time period and the length of the second time period.

55. The terminal device according to any one of claims 39 to 50, further comprising:
a second sending unit, configured to send third information to the network device, wherein the third information is used to indicate that the terminal device does not perform the joint channel estimation.

56. The terminal device according to claim 55, wherein the third information is determined based on a comparison result between a measurement value of a reference signal received power, RSRP, of the terminal device and a threshold of the RSRP.

57. The terminal device according to any one of claims 39 to 56, wherein the terminal device is applied to a non-terrestrial communication network.

58. A network device, comprising:
a sending unit, configured to send first information to a terminal device, wherein the first information is used to indicate a length of a first time period, and the length of the first time period is associated with joint channel estimation; and wherein the first information is determined by the network device.

59. The network device according to claim 58, wherein the length of the first time period includes one or more of:

> a segment length of segmented pre-compensation;
> a length of a nominal time domain window; and
> a length of an actual time domain window.

60. The network device according to claim 59, wherein the length of the actual time domain window is determined based on one or more of:

> the length of the nominal time domain window;
> an event that destroys one or both of power consistency and phase continuity; and
> the segment length of the segmented pre-compensation.

61. The network device according to claim 60, further comprising:

> a terminating unit, configured to terminate current demodulation reference signal, DMRS, bundling in response to occurrence of the event; and
> a determining unit, configured to determine whether to perform DMRS bundling again based on capability information of the terminal device.

62. The network device according to any one of claims 58 to 61, wherein the first information is associated with an estimated value of a first parameter, and the first parameter is associated with a requirement for DMRS bundling of the joint channel estimation.

63. The network device according to claim 62, wherein the first parameter includes one or more of:

> a timing error;
> a Doppler shift error; and
> a phase difference.

64. The network device according to claim 62 or claim 63, wherein the estimated value of the first parameter is associated with one or both of delay drift and Doppler shift.

65. The network device according to claim 64, wherein one or both of the delay drift and the Doppler shift are determined based on a movement characteristic of a satellite.

66. The network device according to any one of claims 58 to 65, wherein the first information is determined by the network device based on a reference point in a current serving cell.

67. The network device according to claim 66, wherein the reference point is determined by an elevation angle of a satellite in the current serving cell.

68. The network device according to any one of claims 58 to 67, wherein the current serving cell includes a first terminal device and a second terminal device; and wherein the first information is determined by the network device based on the first terminal device, and a capability of the first terminal device is lower than a capability of the second terminal device.

69. The network device according to any one of claims 58 to 68, wherein the first information is sent via one or more of: a broadcast message, radio resource control, RRC, signaling, and downlink control information, DCI.

70. The network device according to any one of claims 58 to 69, further comprising:
a first processing unit, configured to perform the joint channel estimation based on the length of the first time period in response to that the network device does not receive a response message sent by the terminal device for the first information within a preset time.

71. The network device according to any one of claims 58 to 69, further comprising:

a first receiving unit, configured to receive second information sent by the terminal device, wherein the second information is used to indicate a length of a second time period; and
a second processing unit, configured to perform the joint channel estimation based on the length of the second time period.

72. The network device according to claim 71, wherein the terminal device determines the length of the second time period based on one or more of:

location information of the terminal device;
capability information of the terminal device;
location information of the network device; and
motion state information of a satellite.

73. The network device according to claim 71 or claim 72, wherein the second information is a difference between the length of the first time period and the length of the second time period.

74. The network device according to any one of claims 58 to 69, further comprising:
a second receiving unit, configured to receive third information sent by the terminal device, wherein the third information is used to indicate that the terminal device does not perform the joint channel estimation.

75. The network device according to claim 74, wherein the third information is determined based on a comparison result between a measurement value of a reference signal received power, RSRP, of the terminal device and a threshold of the RSRP.

76. The network device according to any one of claims 58 to 75, wherein the network device is applied to a non-terrestrial communication network.

77. A terminal device, comprising: a memory and a processor, wherein the memory is configured to store a program, and the processor is configured to invoke the program in the memory to perform the method according to any one of claims 1 to 19.

78. A network device, comprising: a memory and a processor, wherein the memory is configured to store a program, and the processor is configured to invoke the program in the memory to perform the method according to any one of claims 20 to 38.

79. A terminal device, comprising a processor, wherein the processor is configured to invoke a program from a memory to perform the method according to any one of claims 1 to 19.

80. A network device, comprising a processor, wherein the processor is configured to invoke a program from a memory to perform the method according to any one of claims 20 to 38.

81. A chip, comprising a processor, wherein the processor is configured to invoke a program from a memory to cause a device on which the chip is installed to perform the method according to any one of claims 1 to 38.

82. A computer-readable storage medium storing a program, wherein the program causes a computer to perform the method according to any one of claims 1 to 38.

83. A computer program product comprising a program, wherein the program causes a computer to perform the method according to any one of claims 1 to 38.

84. A computer program, wherein the computer program causes a computer to perform the method according to any one of claims 1 to 38.

<u>100</u>

110

120

120

FIG. 1A

1102

1101

FIG. 1B

1202

1201

1203

FIG. 1C

FIG. 2

FIG. 3

FIG. 4

FIG. 5

Terminal Device 600

Receiving Unit 610

FIG. 6

Network Device 700

Sending Unit 710

FIG. 7

Apparatus 800

Processor 810

Memory 820

Transceiver 830

FIG. 8

## INTERNATIONAL SEARCH REPORT

| International application No. |
| --- |
| **PCT/CN2023/096313** |

| A. | CLASSIFICATION OF SUBJECT MATTER |
| --- | --- |
| | H04L25/02(2006.01)i; H04W72/0446(2023.01)i |

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, 3GPP, IEEE: 指示, 时间段, 长度, 联合, 信道估计, 补偿, 窗, 定时, 多普勒, 相位, 偏移, 漂移, indicat+, time 1w period?, time 1w interval, length, joint+, (channel 2w estimat+), compensat+, window, timing, doppler, phase, shift, offset, drift

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023014110 A1 (LG ELECTRONICS, INC.) 09 February 2023 (2023-02-09) description, paragraphs 108-252 | 1-84 |
| X | WO 2022205475 A1 (BEIJING XIAOMI MOBILE SOFTWARE CO., LTD.) 06 October 2022 (2022-10-06) description, pages 11-29 | 1-84 |
| X | PANASONIC. "Discussion on Coverage Enhancement for NR-NTN" *3GPP TSG RAN WG1 #112, R1-2300905*, 17 February 2023 (2023-02-17), sections 1-4 | 1-84 |
| A | CN 116097685 A (BEIJING XIAOMI MOBILE SOFTWARE CO., LTD.) 09 May 2023 (2023-05-09) entire document | 1-84 |
| A | US 2023046405 A1 (QUALCOMM INC.) 16 February 2023 (2023-02-16) entire document | 1-84 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/096313** |

**C.   DOCUMENTS CONSIDERED TO BE RELEVANT**

| Category* | Citation of document, with indication, where appropriate, of the relevant passages | Relevant to claim No. |
| --- | --- | --- |
| A | CN 115174316 A (SPREADTRUM COMMUNICATIONS (SHANGHAI) CO., LTD.) 11 October 2022 (2022-10-11)<br>   entire document | 1-84 |

Form PCT/ISA/210 (second sheet) (July 2022)

INTERNATIONAL SEARCH REPORT
Information on patent family members

| | International application No. |
|---|---|
| | **PCT/CN2023/096313** |

| Patent document cited in search report | | | Publication date (day/month/year) | Patent family member(s) | | | Publication date (day/month/year) |
|---|---|---|---|---|---|---|---|
| WO | 2023014110 | A1 | 09 February 2023 | None | | | |
| WO | 2022205475 | A1 | 06 October 2022 | CN | 115443713 | A | 06 December 2022 |
| CN | 116097685 | A | 09 May 2023 | None | | | |
| US | 2023046405 | A1 | 16 February 2023 | None | | | |
| CN | 115174316 | A | 11 October 2022 | None | | | |

Form PCT/ISA/210 (patent family annex) (July 2022)